# EUROPÄISCHE PATENTSCHRIFT

(11) **EP 1 108 581 B1**
(45) Veröffentlichungstag und Bekanntmachung des Hinweises auf die Patenterteilung: **06.04.2005**
(21) Anmeldenummer: 00126759.0
(22) Anmeldetag: 06.12.2000
(51) Int. Cl.: B60J 7/14

(54) **Klappverdeck für Fahrzeuge, insbesondere Personenkraftwagen**
Foldable top for vehicles, particularly passenger cars
Toit pliant pour véhicule, notamment véhicules de tourisme

(30) Priorität: 13.12.1999 DE 19960010
(43) Veröffentlichungstag der Anmeldung: 20.06.2001
(73) Patentinhaber: DaimlerChrysler AG, 70567 Stuttgart (DE); CTS Fahrzeug-Dachsysteme GmbH, 21079 Hamburg (DE)
(72) Erfinder: Schuler, Eckart, 71065 Sindelfingen (DE); Orth, Stefan, 75382 Althengstett (DE); Röder, Holger, 73054 Eislingen (DE); Bergerhoff, Harald, 22143 Hamburg (DE)
(74) Vertreter: Müller, Gottfried

(56) Entgegenhaltungen:
- EP-A- 0 835 778
- DE-A- 4 316 485
- US-A- 5 785 375
- US-A- 5 810 422
- US-A- 5 979 970

## Beschreibung

Die Erfindung betrifft ein Klappverdeck für Fahrzeuge, insbesondere Personenkraftwagen gemäß dem Oberbegriff des Anspruches 1.

Klappverdecke sind beispielsweise aus der DE 34 05 920 C2 bekannt. Als Cabrioletverdeck ist das Verdeck zwischen einer einen Fahrzeugräum überdeckenden Schließstellung und einer Ablagestellung verstellbar. In der Ablagestellung ist das Verdeck zusammengelegt und nimmt eine Staulage ein, in der es in einem Aufnahmeraum unterzubringen ist. Der Aufnahmeraum liegt anschließend an den zu überdeckenden Fahrzeuginnenraum, und dem Aufnahmeraum zugeordnet sind seitliche Tragkonsolen, die gegen den Fahrzeugaufbau abgestützt sind und über die die schwenkbare Anlenkung des Verdeckes am Fahrzeugaufbau erfolgt.

Da die Unterbringung des Klappverdeckes in seiner zusammengelegten Staulage im Übergangsbereich zwischen Fahrzeuginnenraum und heckseitigem Kofferraum erfolgt, bedingt sie, bezogen auf eine gegebene Fahrzeuggröße, gewisse Beschränkungen des Raumangebotes bezüglich des Fahrzeuginnenraumes und/oder des Kofferraumes. Hierbei wirkt sich erschwerend aus, dass die tragenden Teile des Klappverdeckes, in Abhängigkeit von der Verdeckgröße und Konstruktion, teilweise nicht unerhebliche Dimensionen aufweisen, die entsprechende Freiräume insbesondere in den längsseitlichen Fahrzeugbereichen bedingen und somit die Gestaltungsfreiheit bezüglich anderweitiger Konstruktionsteile, wie beispielsweise Tankeinfüllstutzen einschränken.

Diese bei Klappverdecken generell gegebenen Schwierigkeiten kommen in verstärktem Maße dann zum Tragen, wenn eine gedrungene Fahrzeugkonstruktion angestrebt wird, da dann das Klappverdeck in seiner Ablagestellung das Kofferraumvolumen zunehmend einschränkt und insbesondere auch die Beladbarkeit des Kofferraumes erschwert.

Besonders merkbar wird dies, wenn das Klappverdeck als sogenanntes Hardtop ausgebildet wird, wie dies beispielsweise aus der DE 197 06 397 C1 bekannt ist, da dann formsteife Dachteile gegeben sind und eine Anpassung an die räumlichen Gegebenheiten in der Ablagestellung lediglich durch wechselseitige Lageveränderungen der Dachteile zueinander und in ihrer Lage zu den den Ablageraum begrenzenden Teilen möglich ist. Erschwerend kommt bei solchen Hardtop-Verdecken hinzu, dass die Verbringung der relativ großformatigen Verdeckteile in den jeweiligen Ablageraum auch entsprechende Zugangsmöglichkeiten bedingt, was zu weiteren Bauraumkonflikten führt.

Mit der DE 199 48 746 A1 wurde des Weiteren bereits ein als Hardtop ausgebildetes Verdeck für Fahrzeuge vorgeschlagen, das aus einem vorderen und einem hinteren Dachteil besteht, die über eine Teleskopschienenführung verbunden sind, und bei dem, zum Öffnen des Verdeckes, das vordere Dachteil zunächst unter das hintere Dachteil eingeschoben wird, bevor das dadurch entstehende Dachteilpaket entlang einer zur Karosserie lagefesten Schienenführung bei geöffneter Heckklappe in den Kofferraum zu verlagern ist. Die Schienenführung ist durch seitlich im Kofferraum angeordnete, einander gegenüberliegende und parallel verlaufende Führungsschienen gebildet, die einen S-förmigen Verlauf haben, um, ausgehend von einem flächenbündigen Verlauf der Dachteile bei geschlossenem Verdeck, durch entsprechend gesteuerten Ablauf beim Öffnen des Verdeckes das vordere unter das hintere Dachteil einführen zu können und das dadurch gebildete Dachpaket unmittelbar unterhalb des geschlossenen, den Kofferraum überdeckenden Deckelteiles plazieren zu können.

Des Weiteren ist aus der DE 36 25 628 A1 ein Hardtop-Verdeck bekannt, das aus einem vorderen und einem hinteren Dachteil besteht und dessen vorderer Dachteil über den hinteren Dachteil seitlich übergreifende Längsholme im Bereich der rückwärtigen Kante des hinteren Dachteiles schwenkbar mit der Karosserie verbunden ist, wobei die Anbindung im Bereich der seitlichen Arme eines Überrollbügels erfolgt. Der hintere Dachteil ist im Bereich seiner vorderen Querkante schwenkbar am vorderen Dachteil angelenkt und aus seiner dem geschlossenen Verdeck entsprechenden Schließlage nach oben über 180° in eine den vorderen Dachteil überdeckende Öffnungslage verschwenkbar. Von dieser Lage ausgehend sind vorderer und hinterer Dachteil, gemeinsam über die gelenkige Anlenkung der Längsholme bei geöffnetem Kofferraumdeckel über 180° nach hinten verschwenkt im Deckelbereich des Kofferraumes zu plazieren, wobei sich die nun nach vorne ragenden Längsholme des vorderen Dachteils längs der Fahrzeugseiten nach vorne in den Sitzbereich erstrecken.

Die DE 197 31 330 A1 zeigt eine weitere Verdeckkonstruktion für Fahrzeuge, bei der das Verdeck zweigeteilt ist und einen vorderen und einen rückwärtigen Verdeckteil aufweist. Den beiden Verdeckteilen ist ein gemeinsamer Schiebefaltbezug zugeordnet, der im Bereich des vorderen Verdeckteiles, bei geschlossenem Verdeck, zwischen seitlichen Holmen läuft, die ausgehend von einem dem rückwärtigen Verdeckteil zugeordneten Verdeckrahmen an den Windlauf des Fahrzeuges anschließen und bei geöffnetem Schiebefaltbezug gegen die vordere Querseite des Verdeckrahmens des rückwärtigen Verdeckteiles einzuklappen sind, wobei der Verdeckrahmen eine kassettenartige Aufnahme für den zusammengeschobenen Schiebefaltbezug bildet. Der dem rückwärtigen Verdeckteil zugehörige Verdeckrahmen ist im Übergangsbereich zum vorderen Verdeckteil über ein Lenkergetriebe mit seitlichen Karosseriesäulen (B-Säulen) verbunden und spannt zusammen mit einem an diesen Säulen angelenkten Stoffspannbügel ein faltbares, eine Heckscheibe beinhaltendes Heckverdeck aus, das bei gegen den Verdeckrahmen des rückwärtigen Verdeckteils eingeschwenktem Stoffspannbügel zusammen mit dem Verdeckrahmen und dem von diesem kassettenartig aufgenommenen Schiebefaltbezug nach hinten abgeklappt auf der Kofferraumabdeckung abgelegt werden kann. Eine Staulage innerhalb des Kofferraumes ist bei dieser Lösung nicht gegeben, ebensowenig ist ein derartiges Verdeckkonzept als Hardtop zu realisieren.

Ein Klappverdeck der eingangs genannten Art ist aus der gattungsgemäßen US 3 375 037 bekannt. Die Tragkonsolen, an denen das Klappverdeck über Traggestänge angelenkt ist, sind ihrerseits über eine Lenkeranordnung am Fahrzeugaufbau befestigt und über einen am Klappverdeck angreifenden Antrieb verschwenkbar. Der Schließlage des Klappverdecks entspricht eine obere Schwenkposition der Tragkonsolen. Die Tragkonsolen sind in dieser Lage fixiert, bis, ausgehend von der Schließlage des Klappverdecks, bei dessen Überführung in eine den Fahrzeuginnenraum freigebende Öffnungslage die Verdeckteile über den am rückwärtigen Verdeckteil angreifenden Antrieb zu einem Paket zusammengefaltet sind. Zum Paket zusammengefaltet liegen die Verdeckteile aufeinander und ragen schräg nach hinten oben über die Fahrzeuggürtellinie hinaus und in einen vor der Hinterachse liegenden kofferraumseitigen Aufnahmeraum hinein. Zur weiteren Verlagerung des zusammengefalteten Klappverdecks in diesen Aufnahmeraum werden die Tragkonsolen nach Freigabe ihrer Fixierung gegenüber dem Fahrzeugaufbau über den am rückseitigen Verdeckteil angreifenden Antrieb und die Lenkeranordnung in eine nach unten abgesetzte, untere Position überführt, die der Staulage entspricht und in der das zusammengefaltete Verdeckpaket ausgehend vom hinter den Vordersitzen liegenden Rückraum des Fahrzeuginnenraums sich fach oben in teilweiser Überdeckung, zur Hinterachse gegen den Teil des Kofferraumes erstreckt, der über den Kofferraumdeckel abgedeckt ist. Abgesehen davon, dass das Klappverdeck beim Zusammenfalten in der der Schließlage des Klappverdecks entsprechenden Position der Tragkonsolen bereits relativ tief in den Aufnahmeraum hineingeschwenkt ist, was für die Schwenkbewegung entsprechende Freiräume bedingt, ergibt sich in der Staulage ebenfalls ein ziemlich großer, wesentliche Teile des Fahrzeuginnenraumes in Anspruch nehmender Raumbedarf, so dass das Gesamtraumangebot des Fahrzeuges ebenso beschränkt wird wie die Verwendung eines derartigen Klappverdecks auf Bauformen von Fahrzeugen beschränkt ist, die entsprechend großvolumig ausgelegt sind.

Mit der nicht vorveröffentlichten EP 0 974 480 A1 wird ein ähnliches Konzept für Klappverdecke von Fahrzeugen vorgeschlagen, wobei in diesem Fall längliche Tragkonsolen vorgesehen sind, die zwischen einer der Schließlage des Klappverdecks entsprechenden aufrechten Position und einer der Staulage des Klappverdecks entsprechenden schräg nach hinten gerichteten Position um eine in ihrem unteren Bereich liegende Festachse zum Fahrzeugaufbau verschwenkbar sind und die an ihrem der Festachse gegenüberliegenden Ende die Anlenkungen für das verstellbare Traggestänge des als Faltverdeck ausgebildeten Klappverdecks tragen. Der rückseitig zum Fahrzeuginnenraum vorgesehene Aufnahmeraum für das abgelegte Klappverdeck ist über einen nach hinten oben in eine aufragende Öffnungsstellung verschwenkbaren Deckel bei in der Staulage befindlichem Klappverdeck abgedeckt und die Umstellung des Klappverdecks zwischen der Staulage mit im Wesentlichen liegender, nach hinten gerichteter Erstreckung der Tragkonsolen und der Schließlage mit aufrechter Erstreckung der Tragkonsolen erfolgt unter gleichzeitiger Verschwenkung der Tragkonsolen und des an diesen angelenkten Traggestänges für das Klappverdeck.

Des Weiteren ist aus der DE 197 06 444 C1 ein Klappverdeck für Fahrzeuge bekannt, die mit einem heckseitigen Kofferraum und einem diesen Kofferraum überdeckenden Kofferraumdeckel versehen sind. Dem Kofferraum ist ein Aufnahmeraum zugeordnet, in dem das zusammengefaltete Klappverdeck unterzubringen ist. Zur Überführung des Klappverdecks in seine Staulage im Aufnahmeraum ist der Kofferraumdeckel in eine nach hinten oben geklappte Öffnungsstellung verschwenkbar, und in seiner Schließlage überdeckt der Kofferraumdeckel das im Aufnahmeraum abgelegte Klappverdeck. Zum Beladen des Kofferraums ist der Kofferraumdeckel in eine nach vorne oben geklappte Beladestellung aufschwenkbar.

Das Klappverdeck ist über Traggestänge mit Tragkonsolen verbunden, die bei der Umstellung des Klappverdeckes zwischen Schließ- und Öffnungslage ebenso wie in der Schließlage des Klappverdeckes zum Fahrzeugaufbau lagefest sind, die aber eine gemeinsame Schwenkachse mit dem Kofferraumdeckel für dessen Verschwenkung in seine nach vorne oben geklappte, den Zugang zum Kofferraum für Beladezwecke freigebende Beladestellung aufweisen. Wird der Kofferraumdeckel bei in der Staulage befindlichem, d. h. im Aufnahmeraum abgelegten, zusammengefalteten und bei geschlossenem Kofferraumdeckel von diesem überdecktem Klappverdeck in seine nach vorne oben geklappte Beladestellung aufgeschwenkt, so werden die Konsolen zum Kofferraumdeckel in Bezug auf die gemeinsame Drehachse über eine Kupplungsverbindung drehfest fixiert, so dass das zusammengefaltete Klappverdeck unter Beibehalt seiner Stellung zum Kofferraumdeckel mit diesem angehoben wird und dadurch bei der Beladung nicht mehr, oder zumindest weniger störend im Zugangsbereich zum Kofferraum liegt. Hierfür müssen zusätzliche Aufwendungen und konstruktive Einschränkungen in Kauf genommen werden.

Der Erfindung liegt die Aufgabe zu Grunde, ausgehend von einem Klappverdeck der eingangs genannten Art dieses dahingehend auszugestalten, dass sich eine kompakte Bauweise auch hinsichtlich der Unterbringung des Klappverdeckes bei vorteilhaften Beladungsverhältnissen für den Kofferraum des Fahrzeuges ergibt.

Gemäß der Erfindung wird dies mit den Merkmalen des Anspruches 1 erreicht.

Ausgehend von der Verstellbarkeit der Tragkonsolen zwischen einer oberen, der Schließlage des Klappverdecks entsprechenden Position und einer unteren, der Staulage des Klappverdecks, in der das Klappverdeck zusammengefaltet ist, entsprechenden Position und der dadurch geschaffenen Möglichkeit, das durch die Zusammenfaltung geschaffene Verdeckpaket insgesamt durch Veränderung der Position der Tragkonsole zu verstellen wird hierfür einmal Gebrauch gemacht, um die bei der Umstellung des Klappverdecks zwischen Schließlage und Staulage erforderlichen Bewegungen der Verdeckteile und der Traggestänge in Bereichen ausführen zu können, in denen hinreichender Freiraum gegenüber sonstigen Konstruktionsteilen gegeben und damit einengende Überschneidungen vermieden sind. Damit wird es auch möglich, für das Klappverdeck einen Aufnahmeraum vorzusehen, der in dem räumlich kritischen Bereich der Hinterachse unterhalb des Kofferraumdeckels liegt, was andererseits den Zugang zum Kofferraum bei einer Abdeckung über einen Kofferraumdeckel erschwert, der in eine nach vorne oben geklappte Beladestellung aufzuschwenken ist. Diese Einschränkung wird mit den zur Verstellung des Klappverdecks zwischen Schließlage und Staulage bereits vorhandenen Mitteln dadurch zumindest teilweise behoben, dass das Klappverdeck ausgehend von seiner Staulage unterhalb des geschlossenen Kofferraumdeckels bei nach vorne oben in seine Beladestellung verschwenktem Kofferraumdeckel gegen diesen angehoben und dadurch in eine Lage gebracht wird, in der das Klappverdeck zumindest teilweise außerhalb des Kofferraumes liegt. Dies wird allein durch Verstellung der Tragkonsolen erreicht, so dass auch der damit verbundene Steuerungsaufwand gering ist.

In Verbindung mit einer konstruktiv einfach zu realisierenden Verschwenkbarkeit der Tragkonsolen in Hochrichtung und einer Ausrichtung der Tragkonsolen in Fahrzeuglängsrichtung lässt sich für die Staulage zudem eine im Wesentlichen gleiche Erstreckung der Tragkonsolen und der in Verbindung zu diesen vorgesehenen Traggestänge des Klappverdeckes erreichen, und zwar bei Überdeckung in seitlicher oder in Hochrichtung, so dass bei der erfindungsgemäßen Lösung auch der räumliche Aufwand für Tragkonsolen und Traggestänge klein gehalten wird und dadurch den Raumbedarf für das in der zusammengefalteten Lage befindliche Verdeck nicht wesentlich beeinflusst.

Zweckmäßigerweise werden die Tragkonsolen bei Ausrichtung in Fahrzeuglängsrichtung in ihrem längsmittleren Bereich gelagert und in ihrem bezogen auf die Fahrzeuglängsrichtung vorderen Bereich über eine entsprechende Stelleinrichtung, beispielsweise hydraulische Stellzylinder beaufschlagt, bei Anlenkung des Verdeckes bzw. dessen Traggestängen im rückwärtigen Bereich der Tragkonsolen, so dass mit dem Anheben des in seiner zusammengelegten Staulage befindlichen Klappverdecks dieses auch nach vorne verlagert wird und eine Ausgangsposition erreicht, die für das Entfalten des Klappverdeckes besonders zweckmäßig ist. Bevorzugt kann die der Schließstellung entsprechende angehobene Position der Tragkonsolen zugleich die Ausgangslage für das Zusammenfalten des Klappverdeckes bei der Überführung in die Staulage, bzw. bei umgekehrtem Ablauf von der Überführung aus der Staulage in die Schließlage bilden und des Weiteren der Position entsprechen, in die das zusammengefaltete Klappverdeck zur Erleichterung der Beladung des Kofferraums gebracht wird.

Neben der Verschwenkbarkeit der Tragkonsolen um eine aufbaufeste Achse können die Konsolen in ihrer Höhenlage gegenüber dem Fahrzeugaufbau über diesbezüglich übliche Gestängeführungen verlagerbar sein, wodurch sich fallweise eine bessere Anpassung an gegebene Konstruktionsbedingungen erreichen lässt.

Weitere Einzelheiten und Merkmale der Erfindung ergeben sich aus den Ansprüchen. Desweiteren wird die Erfindung mit ergänzenden Merkmalen anhand der nachfolgenden Ausführungsbeispiele noch näher erläutert. Es zeigen:
- Figur 1: eine stark schematisierte Teildarstellung eines Cabriolet-Fahrzeuges, dessen als Hardtop ausgebildetes Verdeck sich in seiner Ablagestellung befindet, in der es einen Teilbereich des Kofferraumes des Fahrzeuges einnimmt und vom Kofferraumdeckel überspannt ist,
- Figur 2: eine der Figur 1 entsprechende Grunddarstellung des Cabriolet-Fahrzeuges bei um eine dem bezogen auf die Fahrzeuglängsrichtung rückwärtigen unteren Ende des Kofferraumdeckels zugeordneter Schwenkachse in eine das abgelegte Verdeck freigebende, rückwärtige Öffnungslage verschwenktem Kofferraumdeckel und bei in eine Zwischenstellung angehobenen Verdeck, wobei das Verdeck in dieser Zwischenstellung, wie in Figur 1, sich in einer zusammengefalteten Staulage befindet,
- Figur 3: eine Übergangsstellung des Klappverdeckes bei dessen Überführung in die Schließlage, ausgehend von der Zwischenstellung gemäß Figur 2,
- Figur 4: das Verdeck in seiner den Innenraum überdeckenden Schließlage, wobei der Kofferraumdeckel in seine den Kofferraum nach vorne übergreifende Schließstellung überführt ist,
- Figur 5: eine der Figur 1 entsprechende Anordnung des im Kofferraum abgelegten, zusammengefalteten Verdecks in seiner Ablagestellung bei um eine vordere Schwenkachse in eine Öffnungsstellung hochgeklapptem und den Kofferraum zu Beladezwecken freigebendem Kofferraumdeckel,
- Figur 6: eine der Figur 5 entsprechende Öffnungssituation des Kofferraumes des Fahrzeuges bei zusammengeklapptem Verdeck, wobei das Verdeck insgesamt, und im zusammengefaltetem Zustand, in eine der Figur 2 entsprechende Zwischenstellung angehoben ist, so dass sich eine vergrößerte Zugangsöffnung zum Beladen des Kofferraumes ergibt,
- Figur 7: eine stark schematisierte Darstellung der dem Verdeck in der Anlenkung zum Fahrzeug zugeordneten Mechanik in einer Positionierung, die nahezu der Schließstellung des Verdeckes gemäß Figur 4 entspricht, wobei die zugehörigen Karosserieteile des Fahrzeuges nicht dargestellt sind,
- Figur 8: eine der Figur 7 im Prinzip entsprechende Darstellung bei einer Stellung der Verdeckmechanik, in der das nicht weiter dargestellte Verdeck sich in einer Übergangsstellung zwischen seiner Schließstellung (Figur 4) und seiner zusammengefalteten Staulage (Figur 2) befindet,
- Figur 9: eine Darstellung des Verdeckgestänges in einer der Position gemäß Figur 2 bzw. Figur 6 entsprechenden Stellung, in der das Verdeck seine Staulage einnimmt,
- Figur 10: eine Darstellung des Verdeckgestänges in einer der Ablagestellung des Verdeckes gemäß Figur 1 entsprechenden Stellung, und
- Figur 11: eine schematisierte Darstellung einer konstruktiven Ausgestaltung der einer Fahrzeugseite zugeordneten Verdeckmechanik ohne zugehörige Verdeckteile.

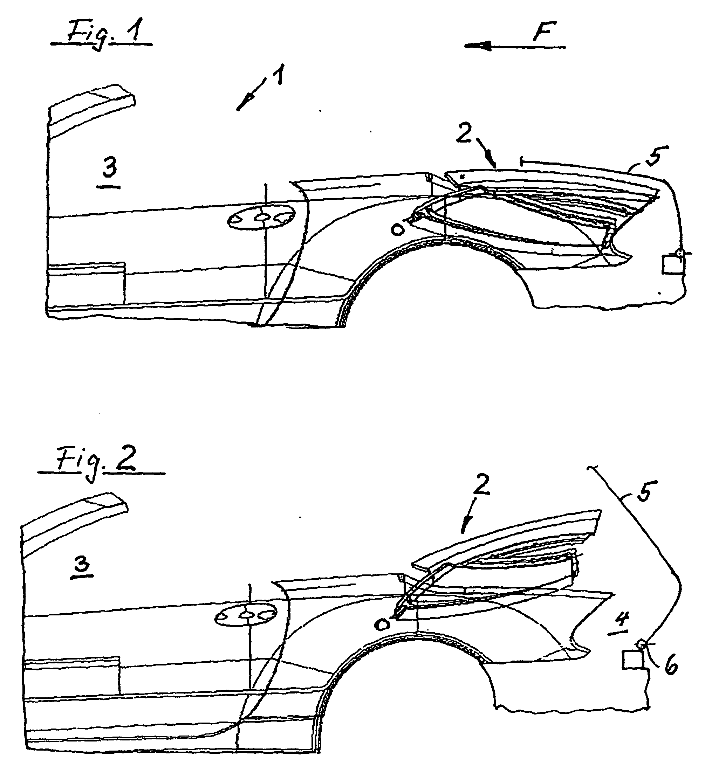

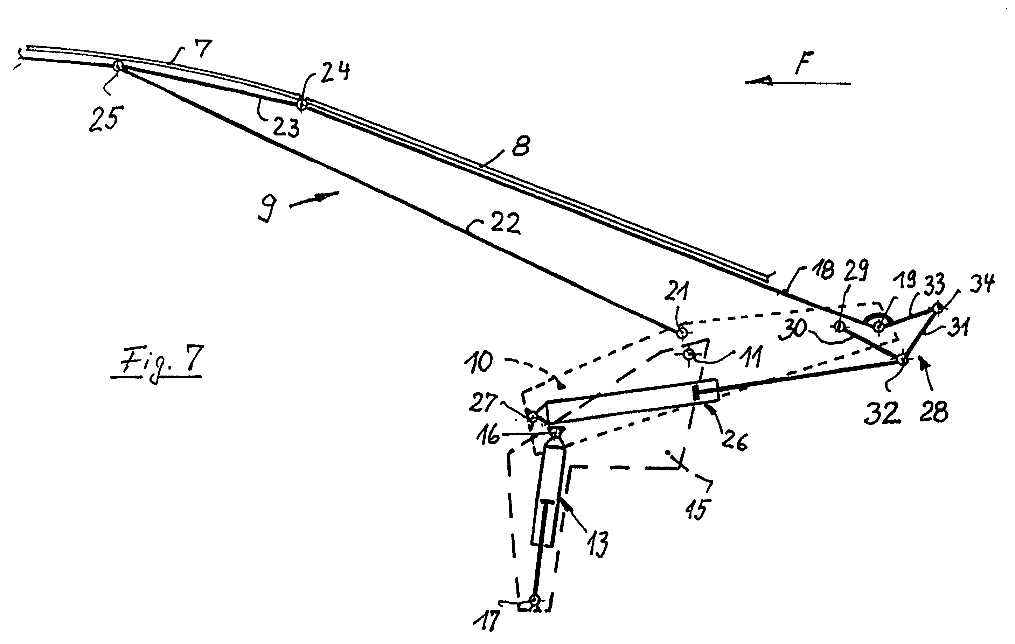

Anhand der Figuren 1 bis 4 sowie 5 und 6 werden zunächst die der Erfindung zugrundeliegenden Lösungsprinzipien erläutert, die nachfolgenden Figuren 7ff veranschaulichen eine konstruktiv mögliche und vorteilhafte Lösung.

Figur 1 zeigt eine Cabriolet-Version eines Personenkraftwagens 1, dessen Klappverdeck 2 als Hardtop ausgebildet ist und in seiner Schließstellung (Figur 4) dachseitig einen Fahrzeuginnenraum 3 überdeckt.

Bei geöffnetem Klappverdeck 2 ist dies heckseitig im Kofferraum 4 des Fahrzeuges 1 abgelegt und wird, wie Figur 1 zeigt, von einem Kofferraumdeckel 5 überdeckt, der zum Ein- und Ausfahren des Klappverdeckes 2 in den Kofferraum 4 um eine dem hinteren Endbereich des Fahrzeuges 1 zugeordnete, hier bei 6 angedeutete Schwenkachse, die in Fahrzeugquerrichtung verläuft, nach hinten in eine Öffnungslage (Figuren 2 und 3) verschwenkt werden kann, in der das in seiner Ablagestellung (Figur 1) im Kofferraum 4 abgelegte Verdeck freigegeben ist und in Gegenrichtung - in Richtung auf seine Schließlage gemäß Figur 4 - verschwenkt werden kann.

Das als Hardtop ausgebildete Verdeck 2 besteht, wie Figur 3 erkennen lässt, aus einem Dachteil 7 und einem Rückfensterteil 8, die schwenkbar miteinander verbunden sind und denen in der Verbindung zum Fahrzeugaufbau ein insgesamt mit 9 bezeichnetes Traggestänge (Figur 7) zugeordnet ist.

Dieses Traggestänge 9 ist über eine Konsole 10 getragen (Figuren 7ff), die ihrerseits um eine Fahrzeugquerachse 11 verschwenkbar mit dem Fahrzeugaufbau verbunden ist, wobei diese Verbindung über einen aufbaufesten Lagerbock 15 erfolgt, gegen den sich auch die im Ausführungsbeispiel durch einen Hydraulikzylinder gebildete Stelleinrichtung 13 abstützt, über die die Konsole 10 um die Achse 11 verschwenkbar ist.

Beim Übergang aus der in Figur 1 dargestellten Ablagestellung des Klappverdeckes 2 - Ablage im Kofferraum 4 - in die Schließstellung (gemäß Figur 4) - nach Schwenken des Kofferraumdeckels 5 in seine rückwärtige Öffnungslage - wird das nach wie vor seine zusammengefaltete Staulage einnehmende Klappverdeck durch Verschwenken der Konsole 10 zunächst in eine angehobene Zwischenstellung (Figur 2) gebracht, im Ausführungsbeispiel geschwenkt, und erst ausgehend von dieser Zwischenlage durch Ausfalten des Verdeckes 2 in die Schließlage gemäß Figur 4. In dieser bleibt die Konsole 10 in ihrer angehobenen Zwischenstellung (Faltlage). Im Gegenzug wird beim Öffnen des Klappverdeckes zunächst die Zwischenstellung gemäß Figur 2 angefahren, wobei das Dachteil 7 über das Rückfensterteil 8 eingeklappt und beide Teile zusammen in die Staulage gemäß Figur 2 gebracht werden. Danach erfolgt die Absenkung in den Kofferraum 4 durch Verlagerung der Konsole 10, im Ausführungsbeispiel durch Verschwenken der Konsole 10. In dieser die Ablagestellung bildenden Endstellung kann das Klappverdeck 2 vom Kofferraumdeckel 5 überdeckt werden, so dass sich für das abgelegte Klappverdeck 2 eine vom Kofferraumdeckel 5 überdeckte Endlage gemäß Figur 1 ergibt.

Ist das Klappverdeck 2 in seine Schließstellung (Figur 4) überführt, so schließt der Kofferraumdeckel 5 an den rückwärtigen Endbereich des Klappverdeckes 2 an, und zwar, wie in Figur 4 veranschaulicht, im unteren Endbereich des Rückfensterteiles 8.

In seiner Ablagestellung nimmt das zusammengefaltete Klappverdeck insbesondere bei Ausbildung des Klappverdeckes 2 als Hardtop einen Teil des sonst als Kofferraum nutzbaren Fahrzeugvolumens ein, und dies auch über die Breite des Fahrzeuges, auch wenn die harten Schalen von Dachteil 7 und Rückfensterteil 8 teils selbst Bestandteile des Traggestänges bilden. Dieser schon in der Staulage gegebene Raumbedarf wächst, wenn das Klappverdeck 2 ausgehend von seiner Ablagestellung im Kofferraum, wie an sich bekannt, entfaltet würde, da die Teile des Klappverdeckes, insbesondere dessen Traggestänge große Schwenkwege zu durchlaufen haben.

Diesen Raumbedarf zu vermeiden und dadurch auch die Größe des Paketes zu reduzieren, das das Klappverdeck in seiner zusammengeklappten Staulage einnimmt, wird dadurch ermöglicht, dass das Zusammenfalten des Klappverdeckes in einer Zwischenstellung erfolgt, in der das Klappverdeck über die Konsole in einem Bereich (Figur 2) gehalten ist, der gegenüber der Ablagestellung (Figur 1) in Richtung auf den Deckel verlagert ist und bei geöffnetem Deckel 5 eingenommen werden kann. Durch diese Lösung lassen sich ansonsten unvermeidbare Bauteilüberschneidungen, beispielsweise mit dem im Bereich des Kofferraumes angeordneten Tankeinfüllstutzen und dergleichen vermeiden.

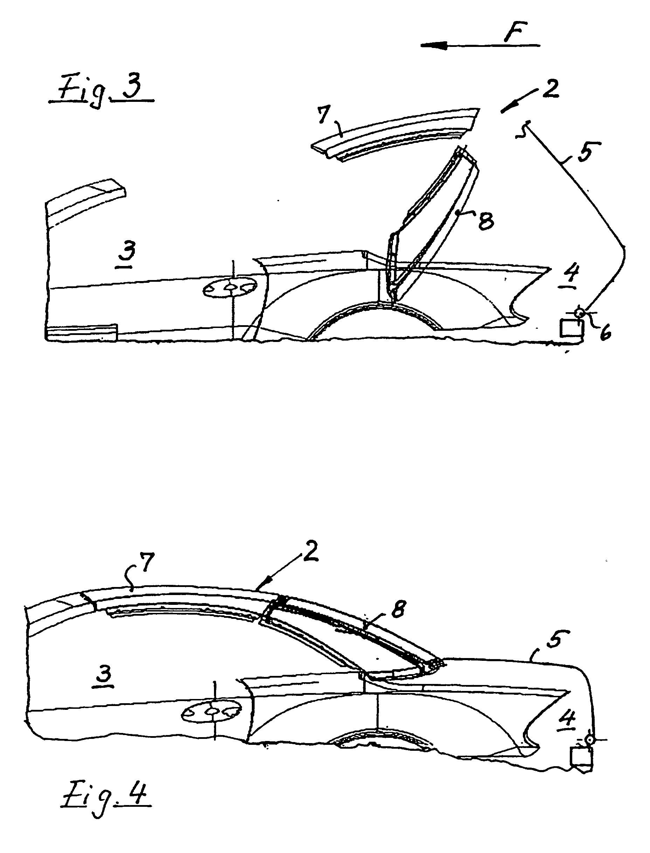

Figur 5, in Analogie zu Figur 1, lässt erkennen, dass in Abhängigkeit von der Größe der Bauteile des Klappverdeckes, insbesondere in Abhängigkeit von Dachteil 7 und Rückfensterteil 8 das abgelegte Klappverdeck 2 nicht nur einen wesentlichen Teil des Kofferraumes 4 einnimmt, sondern diesen auch in Richtung auf das rückwärtige Ende des Fahrzeuges 1 weitgehend überdeckt, mit der Folge, dass über das Klappverdeck nicht nur ein Teil des Kofferraumvolumens blockiert ist, sondern auch der Zugang zum verbleibenden Kofferraumvolumen bei in der Ablagestellung befindlichem Klappverdeck 2 erschwert ist und gegebenenfalls die Ablage größerer Gegenstände nicht mehr ermöglicht, ungeachtet des für die Beladung des Kofferraumes 4 um eine in seinem vorderen Endbereich liegende Schwenkachse 14 in eine nach vorne oben geklappte Öffnungsstellung überführten Kofferraumdeckels 5.

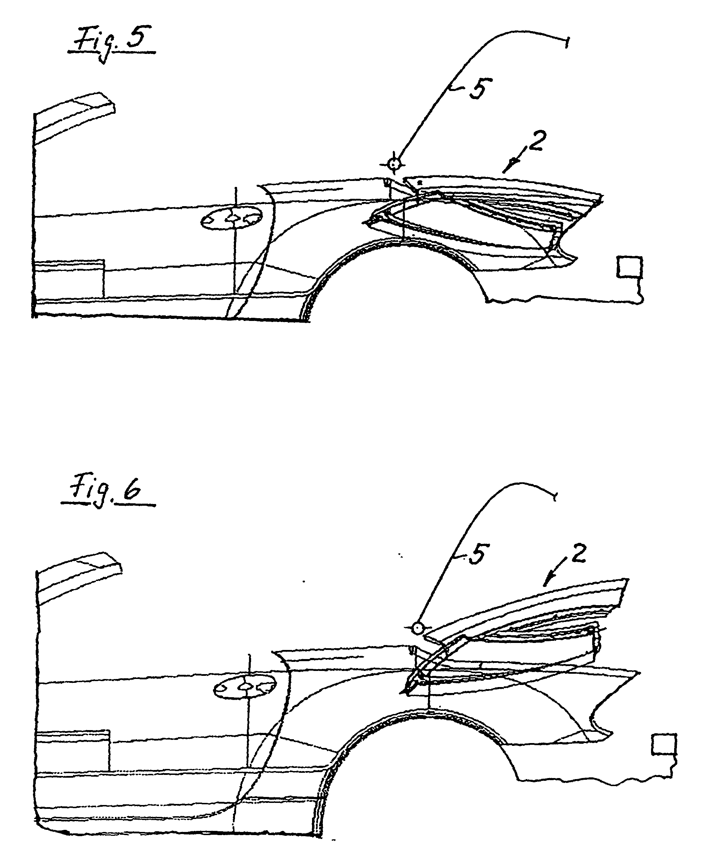

Diesem Nachteil wird bei der erfindungsgemäßen Lösung dadurch begegnet, dass das in seiner Staulage zu einem Paket zusammengefaltete Klappverdeck 2 für die Beladung des Kofferraumes 4 in eine zumindest teilweise ausserhalb des Kofferraumes 4 liegende Stellung verbracht, insbesondere verschwenkt oder angehoben werden kann, wobei dies wiederum durch entsprechende Verstellung der Konsolen 10 erfolgt, die das Verdeckpaket tragen. Bevorzugt ist die Beladestellung gemäß Figur 6 zur Zwischenstellung gemäß Figur 2, die der Staulage des Daches entspricht, identisch, und kann beispielsweise beim Öffnen des Kofferraumdeckels 5 mit angefahren werden.

Eine mögliche Lösung zur zweiseitigen Verschwenkbarkeit des Kofferraumdeckels zeigt beispielsweise die DE 195 16 876 C1.

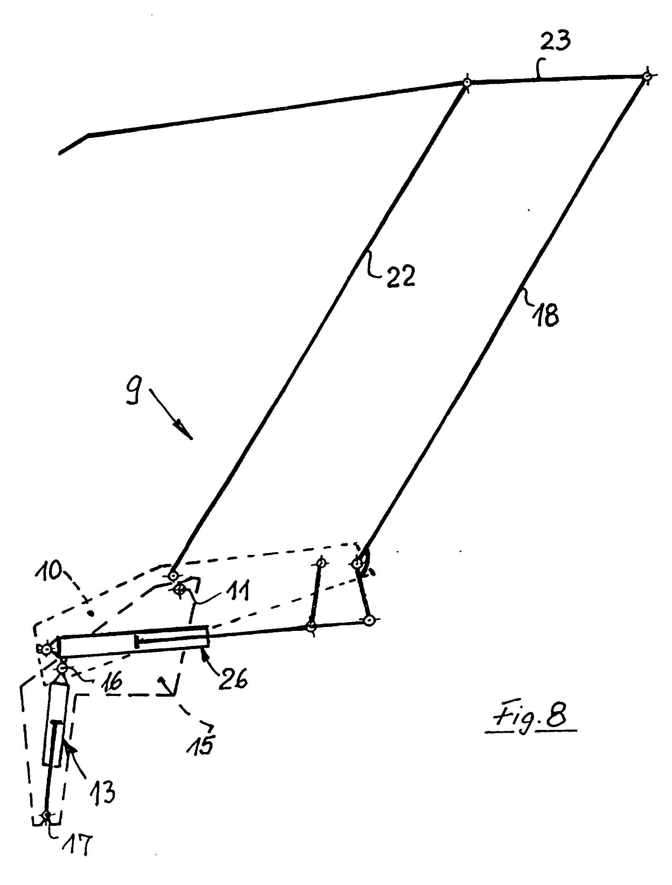

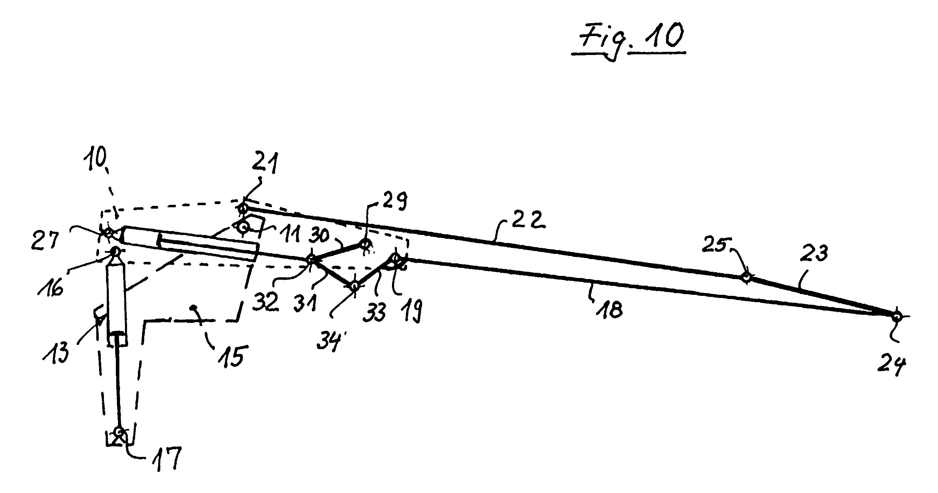

Eine Funktion des Klappverdeckes gemäß der Erfindung, wie sie anhand der Figuren 1 bis 6 beschrieben wurde, lässt sich beispielsweise konstruktiv in einer Form verwirklichen, wie sie in Figur 7 schematisiert dargestellt ist, wobei die Figuren 8 bis 10 ergänzend abweichende Stelllagen für das Klappverdeck zeigen.

In Figur 7 ist mit 10 wiederum die Konsole bezeichnet, die als gegenüber dem Aufbau des nicht dargestellten Fahrzeuges verstellbarer Zwischenträger des Klappverdeckes 2 dient, wobei die Konsole 10 in der gezeigten Schemadarstellung über einen zum Aufbau des nicht gezeigten Fahrzeuges feststehenden Lagerbock 15 getragen ist. Gegenüber dem Lagerbock 15 ist die Konsole 10 im Ausführungsbeispiel über eine in Fahrzeugquerrichtung verlaufende Achse 11 schwenkbar gelagert, wobei die Schwenkachse 11 im Ausführungsbeispiel im längsmittleren Bereich der sich in Fahrzeuglängsrichtung erstreckenden Konsole 10 liegt und wobei die Konsole 10 an ihrem bezogen auf die Fahrtrichtung vorderen Ende über eine Stelleinrichtung 13 in Form eines hydraulischen Stellzylinders gegen den Lagerbock 15 abgestützt ist. Der Zylinder 13 ist an seinem oberen Ende im Anlenkpunkt 16 schwenkbar mit der Konsole 10 verbunden, und gegenüberliegend an seinem unteren Ende in einem Anlenkpunkt 17 gegen den Lagerbock 15 abgestützt.

Im zur Stelleinrichtung 13 gegenüberliegenden Endbereich ist an der Konsole 10 der das Rückfensterteil 8 tragende Verdecklenker 18 des Traggestänges 9 im Anlenkpunkt 19 gelagert, wobei die Konsole 10 als Basis des Traggestänges 9 in einem im Bereich der Schwenkachse 11 liegenden Anlenkpunkt 21 mit einem weiteren Lenker, dem Führungslenker 22 verbunden ist, der zusammen mit dem Verdecklenker 18 einen Koppellenker 23 trägt, dessen Anlenkpunkte am Lenker 18 und am Lenker 22 mit 24 und 25 bezeichnet sind. Der Koppellenker 23 trägt das Dachteil 7, der Verdecklenker 18 den Rückfensterteil 8.

In der Darstellung gemäß Figur 7 ist eine der Schliessstellung des Verdeckes entsprechende Positionierung des Traggestänges 9 und der Konsole 10 veranschaulicht, also eine Stellung entsprechend Figur 4, in der die Konsole 10 gegenüber dem Kofferraum 4 nach oben verlagert ist. Dies ist bezogen auf die Lösung gemäß Figur 7 durch Verschwenken der Konsole 10 um die Fahrzeugquerachse 11 über die Stelleinrichtung 13 erreicht. Die Verschwenkbarkeit um eine feststehende Fahrzeugquerachse 11 stellt eine konstruktiv besonders einfach beherrschbare Lösung dar. Im Rahmen der Erfindung sind aber auch anderweitige Verstellmöglichkeiten für die Konsole möglich, so beispielsweise über Lenker oder dergleichen.

Die Verstellung des Traggestänges 9 gegenüber der Konsole 10 erfolgt über ein Stellglied 26 in Form eines Hydraulikiylinders, der sich im wesentlichen längs der Konsole 10 erstreckt und der konsolenseitig im vorderen Endbereich der Konsole 10 in einem Anlenkpunkt 27 schwenkbar abgestützt ist. Am Verdecklenker 18 greift der Stellzylinder 26 über ein Kniehebelgestänge 28 an, bestehend aus einem im Punkt 29 an der Konsole 10 angelenkten Hebel 30 und einem Hebel 31, der im Punkt 32 mit dem Hebel 30 schwenkbar verbunden ist und auf den Lenker 18 über einen Hebelarm 33 wirkt, wobei der Hebel 31 und der Hebelarm 33 im Anlenkpunkt 34 verbunden sind und der Hebelarm 33 vom hierzu starren Lenker 18 im Bereich von dessen Anlenkpunkt 19 an der Konsole 10 auskragt.

Wird der das Stellglied 26 bildende Zylinder eingefahren, so gelangt das Traggestänge 9 zunächst in eine Stellung gemäß Figur 8, die in etwa einer Zwischenstellung des Verdeckes 2 gemäß Figur 3 entspricht, in der das Rückfensterteil 8, und in entsprechender Weise die Lenker 18 und 22 des Traggestänges 9, die insgesamt die C-Säule des Klappverdeckes 2 bilden, ausgehend von der Schließstellung gemäß Figur 4 im Uhrzeigersinn nach hinten unten schwenken, so dass im Verlauf des weiteren Schwenkweges das schalenförmige Dachteil 7 und das ebenfalls schalenförmige Rückfensterteil 8 mit ihren Innenflächen einander zugewandt übereinander zu liegen kommen.

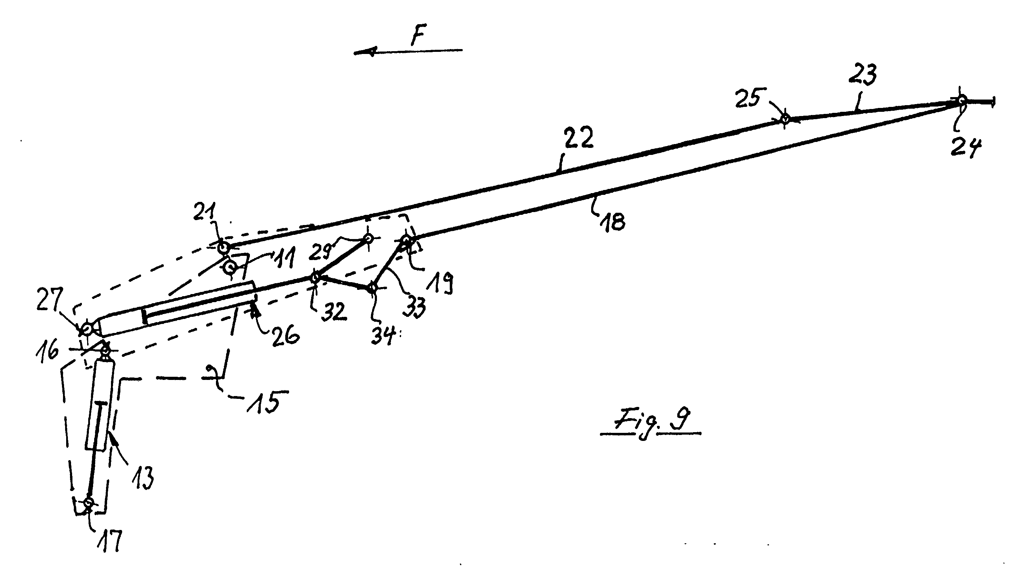

Figur 9 zeigt eine in Weiterführung dieser Schwenkbewegung bei gleichbleibender Stellung der Konsole 10 erreichte zusammengefaltete Lage des Traggestänges 9 bzw. des Klappverdeckes, etwa entsprechend der Lage des Klappverdeckes in den Figuren 2 und 6.

Aus dieser Zwischenstellung, in der das Verdeck ein zusammengefaltetes Paket bildet, kann das Verdeck insgesamt unter Beibehalt der Lage der Verdeckteile zueinander durch Verschwenken der Konsole 10 im Sinne eines Absenkens in den Kofferraum 4 in seine Ablagestellung überführt werden, in der es über den Kofferraumdeckel 5, wie in Figur 1 veranschaulicht, abgedeckt werden kann. Für die Figuren 8 bis 10 sind die Bezugszeichen gemäß Figur 7, soweit zum Verständnis zweckmäßig, übernommen.

In der vorstehenden Beschreibung ist davon ausgegangen, dass jeder Fahrzeugseite eine Tragkonstruktion gemäß Figur 7 zugeordnet ist, und zwar bei synchroner Ansteuerung der zugehörigen Stellelemente, nämlich der Stelleinrichtung 13 und des Stellgliedes 26, die im Ausführungsbeispiel beide als Hydraulikzylinder ausgebildet sind. Im Rahmen der Erfindung ist es aber auch möglich, die Konsolen miteinander zu verbinden und den Konsolen eine gemeinsame Stelleinrichtung 13 zuzuordnen.

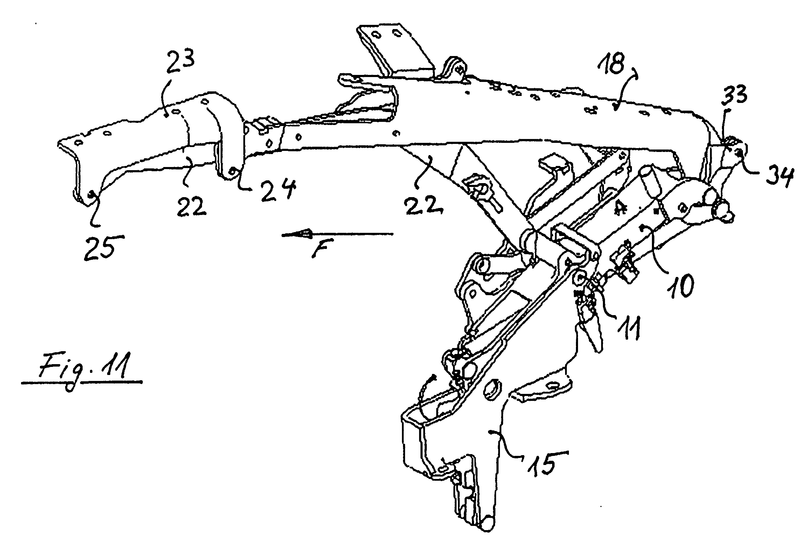

Eine praxisgerechte Konstruktion einer Verdeckführungsmechanik gemäß Figur 7 zeigt Figur 11, wobei für das nicht gezeigte Fahrzeug zur Orientierung dessen Vorwärtsfahrtrichtung durch den Pfeil F angedeutet ist, für entsprechende Teile in den Figuren 7 und 11 gleiche Bezugszeichen finden und die Ausgestaltung veranschaulicht, dass eine Verdeckführungsmechanik gemäß der Erfindung auch in einer praxisgerechten Lösung kompakt baut und bauraumsparend einzusetzen ist.

## Patentansprüche

1. Klappverdeck für Fahrzeuge, insbesondere Personenkraftwagen, mit einem heckseitigen Kofferraum (4), der über einen Kofferraumdeckel (5) abgedeckt ist, welcher in eine bezogen auf die Fahrzeuglängsrichtung nach vorne oben geklappte Beladestellung aufschwenkbar ist, wobei das Klappverdeck (2) zwischen einer den Fahrzeuginnenraum (3) überdeckenden Schließlage und einer Ablagestellung, in der das Klappverdeck (2) in eine Staulage zusammengefaltet in einem Aufnahmeraum des Fahrzeuges untergebracht ist, verstellbar ist und, über verstellbare Traggestänge (9) an seitlichen, dem kofferraumseitigen Aufnahmeraum des Klappverdeckes (2) zugeordneten Tragkonsolen (10) angelenkt, über die Tragkonsolen (10) gegen den Fahrzeugaufbau abgestützt und, gegen die Tragkonsolen (10) zusammengefaltet, durch Verstellen derselben in seiner Lage zum Fahrzeugaufbau zu verlagern ist, wobei die Tragkonsolen (10) in der Schließlage des Klappverdeckes (2) eine obere, in der Ablagestellung des Klappverdeckes (2) eine untere und bei Zusammenfalten des Klappverdeckes (2) eine gegenüber der unteren Position angehobene Position einnehmen,
**dadurch gekennzeichnet,**
**dass** bei in die Beladestellung verschwenktem Kofferraumdeckel (5) das zusammengefaltete Klappverdeck (2) aus seiner Ablagestellung, in der es zusammengefaltet im Überlappungsbereich zum Kofferraumdeckel (5) unterhalb desselben liegt, durch Verstellen der Tragkonsolen (10) aus ihrer unteren, der Ablagestellung entsprechenden Position in eine gegen den Kofferraumdeckel (5) angehobene Position zu überführen ist, in der das Klappverdeck (2) zumindest teilweise außerhalb des Kofferraumes (4) liegt.

2. Klappverdeck nach Anspruch 1,
**dadurch gekennzeichnet,**
**dass** die Tragkonsolen (10) gegenüber dem Fahrzeugaufbau in ihrer Längslage veränderbar sind.

3. Klappverdeck nach Anspruch 1 oder 2,
**dadurch gekennzeichnet,**
**dass** die Tragkonsolen (10) um eine in Fahrzeugquerrichtung verlaufende Achse (11) schwenkbar sind.

4. Klappverdeck nach einem der vorhergehenden Ansprüche,
**dadurch gekennzeichnet,**
**dass** die Tragkonsolen (10) sich in Fahrzeuglängsrichtung erstrecken.

5. Klappverdeck nach Anspruch 3 oder 4,
**dadurch gekennzeichnet,**
**dass** die Tragkonsolen (10) um eine in ihrem längsmittleren Bereich liegende Schwenkachse (11) verschwenkbar sind.

6. Klappverdeck nach Anspruch 5,
**dadurch gekennzeichnet,**
**dass** den Tragkonsolen (10) endseitig eine Stelleinrichtung (13) zugeordnet ist.

7. Klappverdeck nach Anspruch 6,
**dadurch gekennzeichnet,**
**dass** die Stelleinrichtung dem bezogen auf die Fahrzeuglängsrichtung vorderen Endbereich der Tragkonsolen (10) zugeordnet ist.

8. Klappverdeck nach Anspruch 6 oder 7,
**dadurch gekennzeichnet,**
**dass** die Stelleinrichtung (13) für eine Tragkonsole (10) durch einen Stellzylinder gebildet ist.

9. Klappverdeck nach einem der vorhergehenden Ansprüche,
**dadurch gekennzeichnet,**
**dass** die den Tragkonsolen (10) zugeordneten Anlenkungen der Traggestänge (9) des Klappverdeckes (2) im rückwärtigen Bereich der Tragkonsolen (10) vorgesehen sind.

10. Klappverdeck nach einem der vorhergehenden Ansprüche,
**dadurch gekennzeichnet,**
**dass** die Tragkonsolen (10) zu einer gemeinsam verstellbaren Einheit verbunden sind.

11. Klappverdeck nach einem der vorhergehenden Ansprüche,
**dadurch gekennzeichnet,**
**dass** der Kofferraumdeckel (5) und die Tragkonsolen (10) gleichzeitig verschwenkbar sind.

12. Klappverdeck nach einem der vorhergehenden Ansprüche,
**dadurch gekennzeichnet,**
**dass** der Kofferraumdeckel (5) um eine bezogen auf die Fahrzeuglängsrichtung rückwärtige Achse verschwenkbar und in seinem vorderen Bereich aufstellbar ist, derart, dass bei geöffnetem Kofferraumdeckel (5) die Tragkonsolen (10) in eine obere Position verstellbar, insbesondere verschwenkbar sind, die der für die Schließlage des Klappverdeckes (2) gegebenen Position der Tragkonsolen (10) entspricht.

## Claims

1. Foldable top for vehicles, particularly passenger cars, having a rear bootspace (4) which is covered by a boot lid (5) which can be pivoted up into a loading position, in which it is folded forwards and upwards with respect to the longitudinal direction of the vehicle, the foldable top (2) being displaceable between a closed position covering the vehicle interior (3) and a put-away position, in which the foldable top (2), folded up into a stowage position, is accommodated in a receiving space of the vehicle and, via displaceable supporting linkages (9), is coupled to lateral supporting consoles (10), which are assigned to the bootspace receiving space of the foldable top (2), being supported against the vehicle body via the supporting consoles (10) and, folded up against the supporting consoles (10), being movable, by displacement of the same, into its position with respect to the vehicle body, the supporting consoles (10) taking up an upper position in the closed position of the foldable top (2), a lower position in the put-away position of the foldable top (2) and, when the foldable top (2) is folded up, a position in which it is raised with respect to the lower position, **characterized in that** when the boot lid (5) is pivoted into the loading position, the folded-up foldable top (2) can be transferred from its put-away position, in which it is folded up below the boot lid (5) in the overlapping region therewith, by displacement of the supporting consoles (10) from their lower position corresponding to the put-away position, into a position in which it is raised with respect to the boot lid (5) and in which the foldable top (2) is at least partially situated outside the bootspace (4).

2. Foldable top according to Claim 1, **characterized in that** the supporting consoles (10) can be changed in their longitudinal position with respect to the vehicle body.

3. Foldable top according to Claim 1 or 2, **characterized in that** the supporting consoles (10) can be pivoted about an axis (11) running in the transverse direction of the vehicle.

4. Foldable top according to one of the preceding claims, **characterized in that** the supporting consoles (10) extend in the longitudinal direction of the vehicle.

5. Foldable top according to Claim 3 or 4, **characterized in that** the supporting consoles (10) can be pivoted about a pivot axis (11) situated in their longitudinal central region.

6. Foldable top according to Claim 5, **characterized in that** the supporting consoles (10) are assigned an adjusting device (13) on their end side.

7. Foldable top according to Claim 6, **characterized in that** the adjusting device is assigned to that end region of the supporting consoles (10) which is in front with respect to the longitudinal direction of the vehicle.

8. Foldable top according to Claim 6 or 7, **characterized in that** the adjusting device (13) for a supporting console (10) is formed by an adjustable cylinder.

9. Foldable top according to one of the preceding claims, **characterized in that** those means of articulation of the supporting linkages (9) of the foldable top (2) which are assigned to the supporting consoles (10) are provided in the rear region of the supporting consoles (10).

10. Foldable top according to one of the preceding claims, **characterized in that** the supporting consoles (10) are connected to form a jointly displaceable unit.

11. Foldable top according to one of the preceding claims, **characterized in that** the boot lid (5) and the supporting consoles (10) can be pivoted simultaneously.

12. Foldable top according to one of the preceding claims, **characterized in that** the boot lid (5) can be pivoted about an axis which is at the rear with respect to the longitudinal direction of the vehicle and can be erected in its front region in such a manner that, when the boot lid (5) is open, the supporting consoles (10) can be displaced, in particular can be pivoted, into an upper position which corresponds to that position of the supporting consoles (10) which is provided for the closed position of the foldable top (2).

## Revendications

1. Toit pliant pour véhicules, en particulier pour véhicules de tourisme, avec un coffre à bagages arrière (4), qui est recouvert par un couvercle de coffre à bagages (5), qui peut être relevé en une position de chargement relevée vers l'avant par rapport à la direction longitudinale du véhicule, le toit pliant (2) pouvant être déplacé entre une position de fermeture recouvrant l'habitacle intérieur du véhicule (3) et une position de rangement, dans laquelle le toit pliant (2) replié en une position compacte est entreposé dans un espace de réception du véhicule et, articulé par une tringlerie portante réglable (9) à des consoles de support latérales (10) associées à l'espace de réception du toit pliant (2) du côté du coffre à bagages, appuyé contre la structure du véhicule par les consoles de support (10) et, replié contre les consoles de support (10), doit être déplacé par déplacement de celles-ci dans sa position vers la structure du véhicule, les consoles de support (10) occupant une position haute dans la position de fermeture du toit pliant (2), une position basse dans la position de rangement du toit pliant (2) et une position surélevée par rapport à la position basse lors du repliage du toit pliant (2), **caractérisé en ce que**, avec le couvercle du coffre à bagages (5) basculé dans la position de chargement, le toit pliant (2) replié doit être amené de sa position de rangement, dans laquelle il se trouve replié dans une zone de recouvrement avec le couvercle du coffre à bagages (5) en dessous de celui-ci, par déplacement des consoles de support (10) de leur position basse correspondant à la position de rangement, dans une position soulevée vers le couvercle du coffre à bagages (5), dans laquelle le toit pliant (2) se trouve au moins partiellement hors du coffre à bagages (4).

2. Toit pliant selon la revendication 1, **caractérisé en ce que** les consoles de support (10) sont réglables en position longitudinale par rapport à la structure du véhicule.

3. Toit pliant selon la revendication 1 ou 2, **caractérisé en ce que** les consoles de support (10) peuvent pivoter autour d'un axe (11) orienté dans la direction transversale du véhicule.

4. Toit pliant selon l'une quelconque des revendications précédentes, **caractérisé en ce que** les consoles de support (10) s'étendent dans la direction longitudinale du véhicule.

5. Toit pliant selon la revendication 3 ou 4, **caractérisé en ce que** les consoles de support (10) peuvent pivoter autour d'un axe de pivotement (11) situé dans leur région centrale en longueur.

6. Toit pliant selon la revendication 5, **caractérisé en ce qu'**un dispositif de réglage (13) est associé aux consoles de support (10) du côté de leur extrémité.

7. Toit pliant selon la revendication 6, **caractérisé en ce que** le dispositif de réglage est associé à l'extrémité avant des consoles de support (10) par rapport à la direction longitudinale du véhicule.

8. Toit pliant selon la revendication 6 ou 7, **caractérisé en ce que** le dispositif de réglage (13) pour une console de support (10) est formé par un cylindre de réglage.

9. Toit pliant selon l'une quelconque des revendications précédentes, **caractérisé en ce que** les articulations de la tringlerie portante (9) du toit pliant (2) associées aux consoles de support (10) sont prévues dans la région arrière des consoles de support (10).

10. Toit pliant selon l'une quelconque des revendications précédentes, **caractérisé en ce que** les consoles de support (10) sont reliées à une unité à réglage commune.

11. Toit pliant selon l'une quelconque des revendications précédentes, **caractérisé en ce que** le couvercle du coffre à bagages (5) et les consoles de support (10) peuvent pivoter simultanément.

12. Toit pliant selon l'une quelconque des revendications précédentes, **caractérisé en ce que** le couvercle du coffre à bagages (5) peut pivoter autour d'un axe situé à l'arrière par rapport à la direction longitudinale du véhicule et peut être relevé dans sa région avant, de telle façon que, avec le couvercle du coffre à bagages (5) ouvert, les consoles de support (10) puissent se déplacer, en particulier pivoter, dans une position haute, qui correspond à la position des consoles de support (10) donnée pour la position de fermeture du toit pliant (2).
